# EUROPEAN PATENT APPLICATION

(11) **EP 4 279 241 A1**
(43) Date of publication of application: **22.11.2023**
(21) Application number: 22174438.6
(22) Date of filing: 19.05.2022
(51) Int. Cl.: B29C 33/42, B29C 33/44, B29C 33/56, B29C 45/26, B29K 75/00

(54) **A METHOD OF MANUFACTURING A MOLD BODY**

(71) Applicant: Aptiv Technologies Limited, St. Michael (BB)
(72) Inventor: Momot, Piotr, 34-116 Spytkowice (PL); Bak, Szymon, 31-834 Krakow (PL); Forys, Pawel, 31-836 Krakow (PL); Woznicki, Antoni, 30-389 Kraków (PL)
(74) Representative: Manitz Finsterwald Patent- und Rechtsanwaltspartnerschaft mbB

(57) **Abstract**

In a method of manufacturing a mold body for PUR products, a mold body is manufactured that has a cavity surface. Further, a permanent PUR repelling layer is applied on the cavity surface.

## Description

### FIELD

The present disclosure relates to a method of manufacturing a mold body.

### BACKGROUND

For producing a polyurethane (PUR) product, such as a PUR over-mold, injection molds are used that comprise at least one mold body for forming a cavity. Conventional molds used in production of PUR products are usually made from metal (such as steel or aluminum) by e.g. CNC cutting and polishing or electrical discharge machining. These materials are used to cope with thermal effects during PUR forming and also with regard to a desired long service life of the molds. During production, a release agent has to be applied to a cavity of the mold to allow a smooth demolding without any damage on the surface of the final product.

However, the use of a release agent involves a variety of problems. On the one hand, the mold release application step extends the process cycle time because the release agent has to be applied before each shot. Further, the quality of the final product depends on a correct dosage of the release agent and a lack or overuse of the release agent will have an impact on the quality. Further, due to the presence of mold release agent mist in the production area, the safety of the operator is impacted. Finally, there is also an impact on the environment due to the presence of volatile organic compounds from the mold release agent.

Accordingly, there is a need to provide a method of manufacturing a mold body for PUR products that allows to reduce or even eliminate the application of a mold release agent when producing a PUR product with such mold body.

### SUMMARY

The present disclosure provides a method of manufacturing mold body, a use of such mold body, a mold body and a PUR product according to the independent claims. Embodiments are given in the subclaims and the description.

In one aspect, the present disclosure is directed to a method of manufacturing a mold body for polyurethane (PUR) products wherein the method comprises the steps of manufacturing a mold body having a cavity surface and applying a permanent PUR repelling layer on the cavity surface. At least one mold body may be used with further components to form a cavity with a cavity surface for injecting PUR. According to the present disclosure, the cavity surface of the mold body is provided with a permanent PUR repelling layer. Due to this surface layer the amount of a mold release agent may be drastically reduced or even eliminated. The PUR repelling layer on the cavity surface contributes to a release of the PUR product from the cavity without significantly affecting the outer appearance and the functionality of the final PUR product. Since the PUR repelling layer is permanent, it remains bound on the cavity surface not only after one molding cycle but also after a plurality of cycles. This is in contrast to a release layer (skin) that adheres to the final product or to a release agent that needs to be removed after molding.

According to an embodiment, the permanent PUR repelling layer is a tin coating. A tin coating according to the present disclosure is understood as a pure tin coating or a tin based alloy coating. A tin based alloy is understood as an alloy wherein the tin concentration contributes to the majority of alloy content, for example an alloy with a tin content of at least 90%, 95% or 99% by weight. A tin coating as a permanent PUR repelling layer allows for an easy demolding of the final PUR product without the use of a mold release agent. This effect is achieved after multiple injections without any damage or harm to the product surface. Furthermore, the tin coating is not affected by the PUR material processing.

According to a further embodiment, the permanent PUR repelling layer may be applied by sputtering or by electrochemical deposition.

According to a further embodiment, the permanent PUR repelling layer may be applied on a cavity surface that has been 3D printed. Thereby, a reduction of the manufacturing costs can be achieved.

According to a further embodiment, the mold body and/or the cavity surface can be 3D printed and/or can be made of polycarbonate material. This material permits the production of the mold body or of the cavity surface at low cost with good quality. If a 3D printing process is applied, it is possible to use e.g. a UV hardenable polycarbonate based resin.

According to a further aspect on the present disclosure, the application is directed to the use of a mold body that has been manufactured as described above for producing a PUR product.

According to an embodiment, the PUR product is produced without providing the mold with a release agent.

According to a further embodiment, the disclosure is directed to a mold body that has been manufactured as described above.

According to a further aspect, the present disclosure is directed to a PUR product that is produced by injecting PUR in a mold comprising a mold body that has been manufactured as described above.

### BRIEF DESCRIPTION OF THE DRAWINGS

In the drawings
- Fig. 1 depicts a perspective view of a mold comprising a mold body; and
- Fig. 2 depicts an enlarged cross-section through the mold body of Fig. 1.

### DETAILED DESCRIPTION

According to the present disclosure a method is provided for manufacturing a mold body which forms a part of a polyurethane (PUR) injection tool. According to the disclosed method, a mold body 12 having a cavity surface 14 is manufactured. The cavity surface 14 of the mold body 12 is intended to form or to be part of a cavity that will be filled with PUR material during the injection process. The mold body 12 may be used with other components to form the cavity.

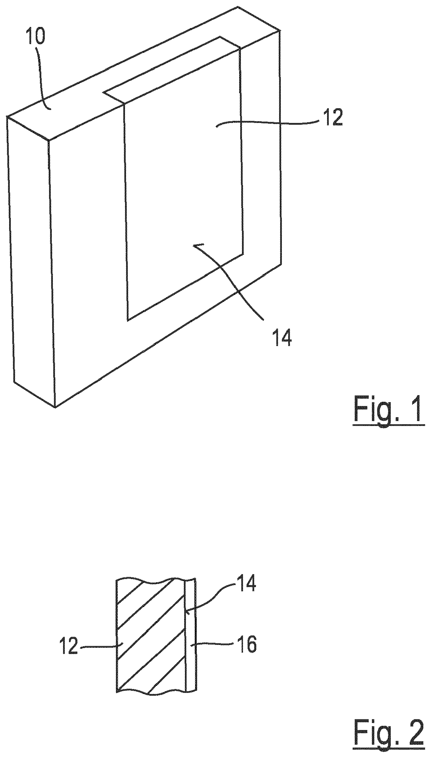

Fig. 1 depicts an exemplary mold (one half) 10 comprising a mold body 12 having a cavity surface 14. The mold body 12 may be an exchangeable mold body, such as a cavity plate.

The mold body 12 may be manufactured from metal such as steel or aluminum or the mold body may be 3D printed.

According to the disclosed method, a permanent PUR repelling layer 16 is applied on the cavity surface 14 of the mold body 12. This permanent PUR repelling layer 16 may be in the form of a tin coating that is applied by e.g. sputtering or electrochemical deposition. The material of the cavity surface 14 can be metal or the cavity surface can be 3D printed, e.g. from polycarbonate material.

Fig. 2 shows an enlarged partial view of a cross-section through the mold body 12 of Fig. 1. As shown, the cavity surface 14 is provided with a layer 16 that is permanently applied onto the mold body 12 and that allows for an easy demolding of the final PUR product.

A mold body that has been manufactured according to a method as described above can advantageously be used for producing a PUR product without applying a release agent to the mold before injecting the PUR material. At least, the amount of release agent can be significantly reduced without negatively affecting the release properties and the shape and quality of the final product. Due to the elimination of a PUR mold release agent a variety of advantages can be achieved. The manufacture process can be simplified and the cycle time can be reduced. Further, a material saving is achieved because no mold release agent is necessary. Thereby, also the PUR process stability and the PUR product quality can be improved. Since no mold release agent will be used, the safety of an operator is improved and the environmental impact due to volatile organic compounds that are emitted is reduced.

## Claims

1. A method of manufacturing a mold body (12) for polyurethane, PUR, products,
the method comprising the steps of:
- manufacturing a mold body (12) having a cavity surface (14),
- applying a permanent PUR repelling layer (16) on the cavity surface (14).

2. Method according to claim 1,
wherein the permanent PUR repelling layer (16) is a tin coating.

3. Method according to claim 1 or 2,
wherein the permanent PUR repelling layer (16) is applied by sputtering.

4. Method according to claim 1 or 2,
wherein the permanent PUR repelling layer (16) is applied by electrochemical deposition.

5. Method according to any one of the preceding claims,
wherein the permanent PUR repelling layer (16) is applied on a cavity surface (14) that is 3D printed.

6. Method according to any one of the preceding claims,
wherein the mold body (12) and/or the cavity surface (14) is made of polycarbonate material.

7. Use of a mold body (12) manufactured in accordance with any one of the preceding claims for producing a PUR product.

8. Use according to claim 7,
wherein the PUR product is produced without providing the mold with a release agent.

9. A mold body (12) that is manufactured in accordance with any one of claims 1 - 6.

10. A PUR product that is produced by injecting PUR in a mold (10) comprising a mold body (12) that is manufactured in accordance with any one of claims 1 -6.
